# EUROPEAN PATENT SPECIFICATION

(11) **EP 4 211 430 B1**
(45) Date of publication and mention of the grant of the patent: **28.05.2025**
(21) Application number: 21790523.1
(22) Date of filing: 10.09.2021
(51) Int. Cl.: G01G 19/02, G01G 19/44

(54) **WEIGHING APPARATUS FOR A WHEELCHAIR**
WIEGEVORRICHTUNG FÜR EINEN ROLLSTUHL
APPAREIL DE PESÉE POUR FAUTEUIL ROULANT

(30) Priority: 11.09.2020 GB 202014335
(43) Date of publication of application: 19.07.2023
(73) Proprietor: MARSDEN WEIGHING MACHINE GROUP LIMITED, Rotherham, South Yorkshire S60 1DX (GB)
(72) Inventor: HALL, Richard, Thirsk YO7 1DA (GB); FLOOD, Tim, Thirsk YO7 1DA (GB); SANDERSON, Beth, Thirsk YO7 1DA (GB); COATES, Mark, Rotherham, South Yorkshire S60 1DX (GB)
(74) Representative: Harrison IP Limited
(86) International application number: PCT/GB2021/052342
(87) International publication number: WO 2022/053813

(56) References cited:
- US-A- 5 994 649

## Description

### Field of the Invention

The present invention relates to apparatus for weighing a wheelchair. The apparatus is transportable, and collapses to allow for easy storage. There is also provided a method of weighing a person.

### Background of the invention

There are times when it is appropriate or necessary to weigh a person, for instance as an indicator of general health or to allow dosages of medication to be calculated. Conventionally this is done by the person standing on a set of scales and taking a reading from the scales.

It is not possible for patients who are unable to stand to be weighed on conventional weighing scales. Although weighing devices such as hoists are available in hospitals, these involve placing the patient in the hoist and lifting the patient in order for a weight to be taken. This is time consuming, is not suitable for use in the home and requires suspending the patient, with consequent safety issues e.g. hoists can topple if not used appropriately. Alternatively, floor scales can be used which weigh both patient and wheelchair. Floor scales tend to be extremely heavy, thus non-portable, and require considerable space, which is often at a premium in healthcare facilities.

US5414225 discloses a portable weighing device including a platform to support and measure the weight of either the front wheels or the back wheels of the wheelchair. The measured weights are then summed.

US5994649 discloses a portable weighing device for the mobility disabled. The apparatus disclosed therein allows the measurement of the portion of the weight of the wheelchair supported by the front wheels, and subsequently the portion of the weight of the wheelchair supported by the back wheels. The measured weights are then summed.

The weighing platforms are necessarily positioned above the floor and thus during the weighing process, some of the weight of the wheelchair is tipped onto the wheels on the floor, leading to inaccuracies in the summed weight.

WO2005/033637 discloses a measuring device such as a scale or medical scale. Numerous embodiments are disclosed and illustrated, including a wheelchair scales which may be portable. There is no disclosure of the inclusion of a mechanism to allows folding of the scales to allow space efficient storage. Portable embodiments require adjustment of the spacing between the beams during deployment, where the spacing between the beams requires alteration depending on the size of the wheelchair.

The present invention aims to address problems in the art such as (but not limited to) those mentioned above.

### Summary of the Invention

According to a first aspect of the present invention, there is provided apparatus for weighing a wheelchair, the apparatus being movable between a weighing position and a folded position to allow ease of transportation and storage.

According to an aspect of the present invention there is provided an apparatus for weighing a wheelchair, the apparatus comprising:
a first platform and a second platform, wherein the first platform is connected to the second platform, and wherein each of the first and second platforms comprises a scale for weighing the wheelchair,
said first platform being moveable relative to the second platform between a folded position and a weighing position,

wherein the first platform pivots towards the second platform about a first fixed axis of rotation to move from the weighing position to the folded position and the second platform pivots towards the first platform about a second fixed axis of rotation to move from the weighing position to the folded position;
wherein in the weighing position the first and second platforms are configured to support all of the wheels of the wheelchair simultaneously;
a connecting member connecting the first platform to the second platform wherein the first and second axes of rotation are spaced across or along the connecting member and a base portion is provided between the first and second axis of rotation, wherein the base portion provides a stand for the apparatus in the folded position.

The platforms of the apparatus disclosed herein are configured to support all of the wheels of a wheelchair simultaneously, allowing a one step process of weighing the wheelchair, and avoiding inaccuracies in weighing the front and back wheels of the wheelchair separately and summing the measured weights.

According to a further aspect of the present invention, there is provided a method of weighing a person seated in a wheelchair comprising:
providing the apparatus as described herein;
ensuring the first and second platforms are provided in the weighing position;
wheeling the wheelchair onto the first and second platforms, such that all wheels of the wheelchair are supported by the first and second platforms;
noting the summed weight provided by the scales of the first and second platforms;
optionally subtracting the weight of the wheelchair from the summed weight to provide the person's weight.

As the method disclosed herein involves measuring the weight supported by all wheels of the wheelchair simultaneously, inaccuracies are avoided associated with tipping weight onto the wheels which are not supported by the weighing platforms.

According to a further embodiment there is provided a kit of parts comprising the weighing apparatus as described herein and instructions for use.

Throughout the Application, where a device is described as having, including, or comprising specific components, or where a method is described as having, including, or comprising specific process steps, it is contemplated that the device of the present teachings also consist essentially of, or consist of, the recited components, and that the method of the present teachings also consist essentially of, or consist of, the recited process steps.

In the Application, where an element or component is said to be included in and/or selected from a list of recited elements or components, or where a method is said to include certain steps, it should be understood that the element or component can be any one of the recited elements or components, or the element or component can be selected from a group consisting of two or more of the recited elements or components. Further, it should be understood that elements and/or features of a composition, an apparatus, or a method described herein can be combined in a variety of ways without departing from the spirit and scope of the present teachings, whether explicit or implicit herein.

It should be understood that the expression "at least one of" includes individually each of the recited objects after the expression and the various combinations of two or more of the recited objects unless otherwise understood from the context and use.

The use of the singular herein, for example, "a," "an," and "the," includes the plural (and vice versa) unless specifically stated otherwise.

The use of the terms "include," "includes", "including,", "comprise", "comprises" "comprising", "have," "has," or "having" should be generally understood as open-ended and non-limiting unless specifically stated otherwise.

The use of the singular herein includes the plural (and vice versa) unless specifically stated otherwise. All numerical values provided incorporate 10% less than and 10% more than the numerical value provided.

In addition, where the use of the term "about" is before a quantitative value, the present teachings also include the specific quantitative value itself, unless specifically stated otherwise. As used herein, the term "about" refers to a ±10% variation from the nominal value unless otherwise indicated or inferred.

It should be understood that the order of steps or order for performing certain actions is immaterial so long as the present teachings remain operable. Moreover, two or more steps or actions may be conducted simultaneously.

Features, integers, characteristics, or groups described in conjunction with a particular aspect, embodiment or example of the invention are to be understood to be applicable to any other aspect, embodiment or example described herein unless incompatible therewith.

At various places in the present specification, values are disclosed in groups or in ranges. It is specifically intended that the description include each and every individual sub combination of the members of such groups and ranges and any combination of the various endpoints of such groups or ranges. For example, an integer in the range of 0 to 40 is specifically intended to individually disclose 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, and 40, and an integer in the range of 1 to 20 is specifically intended to individually disclose 1, 2, 3, 4, 5, 6, 7, 8, 9, 10, 11, 12, 13, 14, 15, 16, 17, 18, 19, and 20.

The use of any and all examples, or exemplary language herein, for example, "such as," "including," or "for example," is intended merely to illustrate better the present teachings and does not pose a limitation on the scope of the invention unless claimed. No language in the specification should be construed as indicating any non-claimed element as essential to the practice of the present teachings.

### Detailed Description

### Weighing Apparatus

According to an aspect of the present invention there is provided apparatus for weighing a wheelchair, the apparatus comprising:
a first platform and a second platform, wherein the first platform is connected to the second platform, and wherein each of the first and second platforms comprises a scale for weighing the wheelchair,
said first platform being moveable relative to the second platform between a folded position and a weighing position,

wherein the first platform pivots towards the second platform about a first fixed axis of rotation to move from the weighing position to the folded position and the second platform pivots towards the first platform about a second fixed axis of rotation to move from the weighing position to the folded position;
wherein in the weighing position the first and second platforms are configured to support all of the wheels of the wheelchair simultaneously;
   a connecting member connecting the first platform to the second platform, wherein the first and second axes of rotation are spaced across or along the connecting member and a base portion is provided between the first and second axis of rotation, wherein the base portion provides a stand for the apparatus in the folded position.

The apparatus of the present invention allows a weight measurement to be provided quickly and accurately for patients who are unable to support their own weight. The apparatus allows a person to be weighed in their wheelchair, assisting a helper in weighing the person, or promoting ease of self-weighing of the person without assistance, promoting independence.

The first and second platforms are configured to support all of the wheels of the wheelchair simultaneously, specifically having a length to allow the wheelchair to be wheeled onto the first and second platforms and to be entirely supported by the first and second platforms. A weight can be obtained by simple summing of the weight provided by the scales of the first and second weighing platforms. There is no requirement to perform a separate weighing step for each of the front and back wheels. This increases the associated accuracy of the weighing process and avoids distortions of the weight recorded caused by weight being tipped from the wheels on the weighing platforms onto the wheels on the floor. The current apparatus and method provide accurate weight measurements even where the first and second platforms are provided at a relatively significant height above the floor.

Generally, the first and second platforms are each configured to support half of the total number of wheels of the wheelchair.

The apparatus of the present invention is transportable, being sufficiently light to allow a single health care practitioner to transport the apparatus and folding, to allow for easy handling or storage. It can quickly and simply be deployed by moving the platforms from the folded to the weighing position. Minimal adjustment is required during deployment enhancing simplicity of use and avoiding the need for heavy lifting of the platforms as the spacing between the platforms in the weighing position is generally fixed. The apparatus can be simply used in a person's home environment. Following use, the apparatus can be easily folded back up for ongoing transportation or storage. Accordingly, the apparatus is suitable for use by medical practitioners providing home visits.

The connecting member is configured to support the weight of the first and second platform in the folded position resulting in minimal space requirements for storage. Specifically, the platforms may be stored folded towards each other, the lateral axis of both platforms extending vertically upwards. The connecting member may include a base portion which in use, in the folded position, may be provided horizontally against the floor or other supporting surface.

According to one embodiment, each of the first and second platforms comprises at least one load cell, generally each of the first and second platforms comprises at least two load cells, typically each of the first and second platforms comprises three to ten load cells, suitably each of the first and second platforms comprises four to eight load cells, advantageously each of the first and second platforms comprises four, six or eight load cells.

In the weighing position, the first and second platforms each have an upper surface configured to receive the wheels of the wheelchair. In the weighing position, the load cells of the first and second platforms are positioned beneath the upper surfaces of the first and second platforms.

Generally, there are provided 4 to 8 load cells beneath the upper surface of the first platform and 4 to 8 load cells beneath the upper surface of the second platform, typically 6 to 10 load cells beneath each of the upper surfaces in the weighing position. The number and positioning of the load cells of the first platform is generally the same as the number and positioning of the load cells of the second platform. The load cells may be evenly distributed along the length of the first and second platforms. However, it is preferred for the load cells to be positioned disproportionately towards the outside perimeter, and/or the corners of the first and second platforms.

Generally, each of the first and second platforms comprises more than five load cells, typically six to ten load cells. The incorporation of such a relatively great number of load cells allows the use of relatively small load cells, meaning that the height of each platform may be minimised. In the weighing position, the upper surfaces are generally less than 3 cm above the floor, typically 1 to 2 cm above the floor.

Where each of the first and second platforms comprises more than three load cells, the load cells may be provided disproportionately towards the perimeter of each of the first and second platforms. According to one embodiment, the shortest distance from a position on the perimeter of each of the load cells to a position on the perimeter of the first or second platform is less than 5 cm, typically 2 to 4 cm, generally 2.5 to 3.5 cm, suitably 2.5 to 3 cm.

Generally, the shortest distance from the geometric centre of each of the load cells to a position on the perimeter of the first or second platform is 4 to 7 cm, typically 5 to 6 cm.

In the weighing position the load cells are provided beneath the upper surfaces of the first and second platforms, generally disproportionately towards the outside perimeter of the upper surfaces of the first and second platforms; typically each of the first and second upper surfaces are substantially rectangular and the load cells are provided beneath the upper surfaces of the first and second platforms, disproportionately towards the corners of the upper surfaces of the first and second platforms.

The disproportionate positioning of the load cells away from the centre of each of the first and second platforms allows accurate weight readings to be provided even where the wheelchair wheels are not provided along the central longitudinal axis of the first and second platforms.

Generally, each of the first and second platforms are substantially rectangular and where each of the first and second platforms comprises more than three load cells, the load cells may be provided disproportionately towards the corners of each of the first and second platforms. Suitably the geometric centre of at least one load cell is provided within 6 cm of each corner of both the first and second platforms, typically 4 to 5.5 cm, generally 4.5 to 5 cm. Typically the geometric centre of at least two load cells is provided within 6 cm of each corner of both the first and second platforms, typically 4 to 5.5 cm, generally 4.5 to 5 cm. According to one embodiment, the geometric centre of all of the load cells is provided less than 7 cm from a corner of each of the first and second platforms, typically 4 to 6 cm, suitably from 4.5 to 5.5 cm from a corner.

Typically, each of the first and second platforms comprises four to ten load cells;
the first and second platforms each have an upper surface configured to receive the wheels of the wheelchair in the weighing position,
each of the upper surfaces is substantially rectangular,
the geometric centre of at least one load cell is provided within 6 cm of each of the corners of the upper surfaces (suitably 4 to 5.5 cm, typically 4.5 to 5 cm), and the geometric centre of all of the load cells is provided less than 7 cm from a corner of each of the upper surfaces (suitably 4 to 6 cm, typically 4.5 to 5.5 cm); generally the geometric centre of two or three load cells (suitably two load cells) is provided within 6 cm of each of the corners of the upper surfaces (suitably 4.5 to 5.5 cm), and the geometric centre of all of the load cells is provided less than 7 cm from a corner of each of the upper surfaces (suitably 4 to 6 cm, typically 4.5 to 5 cm).

According to one embodiment, each of the first and second platforms comprises six or more load cells, and at least one load cell (generally two or three load cells, typically two load cells) is provided beneath the upper surface in the weighing position, wherein the geometric centre of the at least one load cell is provided within 7 cm of each corner of each of the upper surfaces, suitably 4 to 6 cm, typically 4.5 to 5.5 cm. Generally, eight load cells are provided beneath each of the upper surfaces of the first and second platforms in the weighing position, and the geometric centre of two load cells is provided within 7 cm of each corner of each of the upper surfaces, suitably 4 to 6 cm, typically 4.5 to 5.5 cm.

The scales may comprise at least one load cell of any appropriate type, or any other means of recording an applied weight of the person. The skilled man will be well aware of many different scales which may be used. Mention may be made of torsion, tension and compression load cells. Generally, the scales are electronic. The transducers may be strain gauges. Alternatively, or additionally the transducers may be pneumatic or hydraulic. Generally, the apparatus includes a single type of scales. Alternatively, one or more different types of scale may be used. Essentially any weighing device may be used if it is able to fit within the apparatus and accurately record the weight of a wheelchair provided on the first and second platforms.

In the weighing and folded position, the first and second platforms remain connected to each other, ensuring the apparatus is stable, ensuring that no assembly is required prior to use, and preventing the risk of connecting parts being mislaid. The first and second platforms are generally connected through at least one connecting member, where the connecting member is configured to support the weight of the first and second platforms in the folded position. In the folded position, the weight of the apparatus is generally supported by the connecting member.

The first and second platforms pivot towards each other when moving from the weighing position towards the folded position. The first platform pivots towards the second platform about a first fixed axis of rotation to move from the weighing position to the folded position. The second platform pivots towards the first platform about a second fixed axis of rotation to move from the weighing position to the folded position.

The first and second axes of rotation are spaced apart across or along the connecting member.

In the folded position, the first and second platforms are folded towards each other. The first and second platforms generally each include an upper surface configured to receive the wheels of the wheelchair in the weighing position. In the folded position, the upper surfaces generally face each other.

The apparatus includes a connecting member connecting the first platform to the second platform. The connection may be direct or indirect, but is generally direct. The first and second axes of rotation are provided on the connecting member.

The first and second axes of rotation are provided spaced along or across the connecting member. A base portion is provided between the first and second axes of rotation. The base portion is configured to support the first and second platform in the folded position. The base portion provides a stand for the apparatus in the folded position.

The apparatus is supported by the base portion when the first and second platforms are in the folded position. Specifically, the base portion may contact the floor where the first and second platforms are in the folded position and the apparatus is stored, typically only the base portion contacts the floor when the apparatus is in the folded position. The apparatus may include more than one base portion where more than one connecting member is provided between the first and second platforms.

In the folded position, the lateral axis of both of the platforms may extend vertically, with one or more base portions extending horizontally between the platforms.

The base portion is typically parallel to and coincident with the first and second platforms in the weighing position.

The base portion is generally substantially perpendicular to the first and second platforms in the folded position.

The longitudinal axis of the base portion is generally substantially perpendicular to the lateral axis of the first and second platforms in the folded position, although in some embodiments, the angle between the base portion and the first and second platforms may be 70 to 100° in the folded position.

In the folded position, the, or each, base portion is sufficiently large in area to provide a stable support to the first and second platforms in the folded position, but sufficiently small to allow the apparatus to be efficiently stowed. The base portion is generally substantially rectangular, although square configurations are also preferred.

Typically, the connecting member has an associated length extending from the first platform to the second platform and the length of the connecting member is less than the width of each of the first and second platforms to assist with efficient storage of the apparatus in the folded position.

Generally, the distance between the first and second axes of rotation (the base portion) is less than the width of each of the first and second platforms. Typically, the distance between the first and second axes of rotation is 25 to 75% of the width of one of the first and second platforms, suitably 40 to 60%. This results in the separation of the first and second platforms in the folded position being less than the width of one of the platforms through the provision of the base portion. This allows stable storage in the folded position whilst minimising associated space required for storage.

According to one embodiment, the, or each base portion has a length of 50 to 200 mm, generally 50 to 100 mm, typically 75 to 100 mm; and a width of 30 to 100 mm, generally 50 to 75 mm.

According to one embodiment, the apparatus comprises more than one connecting member connecting the first platform to the second platform and each connecting member includes a base portion as described herein.

The apparatus may include two or more connecting members spaced along the length of the first and second platforms. Thus, more than one base portion is generally spaced along the side of the first and second platform, providing stable support for the apparatus in the folded position.

Suitably the fixed axes of rotation about which the first and second platforms pivot is provided through a hinge although other suitable means may be used. Typically, each of the first and second platforms are hinged at two positions along their length. Generally, two hinges are provided across each of the connecting members. According to one embodiment, in the folded position, the hinges extend from the base portion, and act as legs to support the first and second platforms.

According to one embodiment, the length of the first and second platforms is great enough to accommodate all wheels of the wheelchair, and the first and second platforms are hinged at two positions along the length. This increases the stability of the apparatus in both the weighing and folded position. The provision of two or more connecting members, both/all of which may be hinged, results in a stable spacing between the first and second platforms along their entire length, even if during the weighing process the wheels of the wheelchair hit the edges of the platforms.

Regardless of the length of the platforms, the weight of the apparatus is generally less than 10 kg, suitably 8 to 10 kg, typically around 9 kg. This allows the apparatus to be handled by a single user. The relatively low weight also promotes ease of movement between the folded and weighing positions.

According to one embodiment, the, or each, connecting member includes two hinges, the first configured to pivot the first platform between the folded position and the weighing position and the second to pivot the second platform between the folded position and the weighing position.

Suitably, the hinges are spaced across the connecting member, and the base portion is provided between the hinges wherein the base portion is substantially parallel to the first and second platforms in the weighing position, and is substantially perpendicular to the first and second platforms in the folded position.

A suitable arrangement of the connecting member may be termed a "knuckle joint".

The angle of rotation of each of the first and second platforms between the folded position and the weighing position is typically 70 to 180 degrees, suitably 70 to 100 degrees, generally 80 to 90 degrees, preferably around 90 degrees.

Both of the first and second platforms pivot towards each other when moving from the weighing to the folded position. In such embodiments, the angle of rotation of each of the first and second platforms is suitably 70 to 90 degrees.

According to one embodiment, the fixed axes of rotation about which the first and second platforms pivot is substantially parallel to the longitudinal axis of the first and second platforms. This minimises the height of the apparatus when folded to approximately the width of the platforms, increasing the stability of the apparatus in the folded position, when supported by the base portion.

In such embodiments, the base portion is generally substantially perpendicular to the central lateral axis of the first and second platforms in the folded position, typically, the base portion is also substantially parallel to the central lateral axis of the first and second platforms in the weighing position.

The apparatus generally has an associated weight of around 8-10 kg, suitably 8-9kg. This allows the apparatus to be transported easily, and to be lifted by a single person.

The apparatus folds down for ease of handling and storage. In the folded position, the apparatus generally has a height of 350 to 450mm, typically 375 to 400 mm, suitably around 395mm including the handles. In the folded position, the apparatus generally has a width of 750 to 1500mm, suitably 800 to 1100mm, typically around 1000mm and suitably a breadth of 75 to 150mm, typically 110 to 130mm generally around 119 to 120mm including the feet.

The first and second platforms may be electrically connected. Electrical wiring and/or electrical cables may be provided, electrically connecting the first platform and the second platform. Specifically, electrical wiring and/or electrical cables may be connected to the first platform and the second platform. The electrical wiring and/or electrical cables may extend through the connecting member(s), for instance being threaded through the connecting member(s). Where present, the electrical wiring and/or electrical cables may be threaded through the hinge(s). In such embodiments, the connecting member(s) protect the electrical wiring and/or electrical cables from damage, such as pinching against the first or second platforms during movement between the weighing position and the folded position.

The first and second platforms are connected. Upon movement into the weighing position, the platforms may be fixed into position and are sufficiently spaced apart to allow a wheelchair to be rolled onto the platforms, generally without adjustment of the spacing between the first and second platforms. According to one embodiment, the platforms are not locked into position in the weighing position, and are fixed largely due to gravity and/or a non-slip material used on the base of the platforms.

Generally, the connecting member spaces the first and second platforms in the weighing position.

The deployment of the apparatus described herein from the folded position to the weighing position is generally a one-step process and no adjustment of the spacing between the first and second platforms is required following movement from the folded to the weighing position prior to weighing. In the weighing position, the first and second platforms are wide enough, and are spaced apart by a distance that will accommodate the majority of wheelchairs. Such one-step deployment improves the speed and ease of weighing, and avoids any heavy lifting associated with adjustment of the spacing between the first and second platforms.

The dimensions of the platforms, and the spacing between the platforms will differ for wheelchairs designed for use by children compared for those for use by adults. Suitably the first and second platforms are spaced by 200 to 400 mm in the weighing position, typically by 250 to 350 mm in the weighing position, generally by around 300 to 340 mm in the weighing position.

The apparatus generally includes summing means configured to provide the summed weight sensed by the scales of the first platform and of the second platform. The summing means receives signals from each of the scales and produces a signal corresponding to the sum of the weight sensed by all of the scales. Generally, the scales communicate with the summing means electronically, generally through wired connection.

The apparatus is useful for ascertaining the weight of a person seated on a wheelchair, and the scales of the first and second platforms will generally provide the weight of the person and wheelchair combined. According to one embodiment, the summing means may automatically subtract the predetermined weight of the wheelchair from the combined weight to provide an indication of the weight of the person.

Typically, the summed weight is displayed by a digital display provided on the apparatus, and in communication with the summing means. Generally, the weight sensed by all of the scales is summed and displayed within 5 seconds of the wheelchair being placed or transferred onto the apparatus, typically less than 3 seconds, suitably less than 2 seconds. The summed weight displayed may be that of the person (total weight with the weight of the wheelchair subtracted), or that of the total weight sensed.

The summed weight is displayed by a digital display on the apparatus or can be displayed remotely on other devices, suitably through wireless connections such as Bluetooth ^{®}.

The first and second platform are generally of the same or similar dimensions. According to one embodiment, the first and second platforms are oval or rectangular, typically rectangular. The first and second platforms are generally parallel to each other in the weighing position, and generally in both the folded and weighing position. The apparatus is typically substantially symmetrical.

In the folded position, the first and second platforms may abut. In particular, the first and second platforms may comprise a raised or protruding lip along the sides of the upper surface of the first and second platforms. In the folded position, the raised or protruding lips of the first and second platforms tend to abut, providing a closed spacing between the upper surfaces of the first and second platforms in the folded position which is useful for the secure storage of electrical wiring, cables, user interface or monitor. This also prevents dirt, dust and moisture contacting the upper surface of the platforms or any electrical wiring or cables during storage in the folded position. In the unfolded position, such a lip prevents the wheels of the wheelchair slipping off the upper surface inadvertently.

The first and second platforms generally have a lowered ramp at each end to assist the wheeling of wheelchairs on and off the upper surfaces. The inclusion of a ramp at both ends of the first and second platforms allows the wheelchair to roll up the ramp onto the upper surface of the first and second platforms and off the other side. This prevents the need for the front wheel of the wheelchair to rotate 180 degrees as its wheeled backwards off the ramp.

The inclusion of two ramps, one at either end of the first and second platforms also allows the apparatus to be positioned in any direction or position and still allow access from both ends of the first and second platforms, as there is not a specified On and Off end. This increases ease of deployment.

The gradient of the slope at both ends of the first and second platforms is generally the same. In such embodiments, the slope generally extends 100 to 150 mm, suitably 120 to 140 mm, generally around 130mm from the end of the upper surface. The gradient of the ramps may be 10 to 20 degrees, typically 12 to 17 degrees, suitably around 14 to 15 degrees.

Alternatively, the gradient of the slope of the ramp may differ at one end relative to the other end. In particular, one end may have a ramp slope of lower gradient to assist the wheeling of a wheelchair onto the upper surface, and a steeper gradient at the other end to assist the wheeling of the wheelchair off the upper surface.

The steeper ramp may extend 50 to 100mm, typically 50 to 80mm, generally around 70mm from the end of the upper surface. The gradient of the steeper ramp may be 20 to 30 degrees, suitably 25 to 28 degrees, typically around 26.5 degrees.

The shallower ramp may extend 100 to 150 mm, suitably 120 to 140 mm, generally around 130mm from the end of the upper surface. The gradient of the shallower ramp may be 10 to 20 degrees, typically 12 to 17 degrees, suitably around 15 degrees.

The height of the first and second platform from a supporting surface such as the floor to the upper surface is generally 30 to 50mm, suitably 35 to 40 mm. The height from a supporting surface such as the floor to the top of the raised or protruding lip along the sides of the upper surface of the first and second platforms is generally 50 to 100 mm, suitably 55 to 75 mm, generally around 60 mm. This prevents the top surface becoming caught on the footrest of the wheelchair as the wheelchair is wheeled on to it. The first and second platforms are suitably hollow to minimise the associated weight of the apparatus. The scales may be housed within the first and second platforms. Any electrical wiring or electrical cables can also be housed within the first and second platforms and the connecting member where present.

Generally, the apparatus can be easily transported by a single health care practitioner and this is achieved by the weight of the apparatus being under 10 kg (generally including the carry case and monitor). The apparatus generally has an associated weight of 8 to 11 kg, suitably 9 to 10 kg. This allows easy transportation by health care practitioners.

According to one embodiment, the platforms are formed of a metal extrusion, in particular an aluminium extrusion. Alternatively a high strength plastic or carbon fibre may be used. Such materials (in particular an aluminium extrusion) provide the necessary strength characteristics whilst ensuring the platforms are as light weight as possible.

The upper surfaces of the first and second platform may be of sufficient strength and rigidity to support a wheelchair and person seated therein. According to one embodiment, the apparatus may be suitable for bariatric use.

Typically, the upper surface of the first and second platforms have a width range to accommodate all commonly used powered and manual wheelchairs. The dimensions of the platforms, and the spacing between the platforms will differ for wheelchairs designed for use by child compared for those for use by adults. Generally the upper surface of the first and second platforms has an associated width of around 100 to 300 mm; generally 150 to 250 mm, suitably of around 200 mm.

The length of the upper surface of the first and second platforms may be around 60 to 150 cm, typically 70 to 100 cm, suitably 70 to 80 cm, generally around 74 cm.

The ramps and connecting member(s) are generally formed from plastic material, in particular a plastic extrusion. Such materials generally ensure a non-slip surface.

The apparatus typically includes handles for ease of transportation. Suitably the handles are lockable to prevent inadvertent opening of the platforms from the folded to the weighing position. Generally, a co-operating handle is provided on each of the first and second platforms. The handles may include co-operating male and female members. The handles may be lockable.

According to one embodiment, the handles are lockable through the inclusion of corresponding magnets placed in each of the handles. The inclusion of a lockable mechanism in the handles, for instance magnets, in the handle retains the first and second platforms in the folded position which assists with the apparatus being stored and allows ease of manoeuvrability.

The apparatus may be powered by battery, and the apparatus may include an indication of the extent to which the apparatus is charged, and optionally an alert to notify the user that the battery power is low.

The apparatus may include a means to ensure that the platforms are level in the unfolded position, such as for instance, a spirit level.

### Method

According to a further aspect of the present invention, there is provided a method of weighing a person seated in a wheelchair comprising:
providing the apparatus as described herein;
ensuring the first and second platforms are provided in the weighing position;
wheeling the wheelchair onto the first and second platforms, such that all wheels of the wheelchair are supported by the first and second platforms;
noting the summed weight provided by the scales of the first and second platforms;
optionally subtracting the weight of the wheelchair from the summed weight to provide the person's weight.

In order to ensure an accurate measurement, the wheelchair should be supported entirely by the apparatus during the weighing procedure. All of wheels of the wheelchair should be placed on the first and second platforms. Where the wheelchair is transferred onto the apparatus through the help of others (for instance, medical practitioners), all physical support should be withdrawn prior to the weighing procedure.

The apparatus of the present invention generally allows a one-step deployment process when moving the first and second platforms from the folded to the weighing position. In particular, no adjustment of the spacing between the first and second platforms is generally required following movement from the folded to the weighing position prior to weighing. Such one step deployment allows one person to deploy the scales with ease, and avoids potentially heavy lifting caused by adjusting the spacing between the first and second platforms prior to use.

Generally, the first and second platforms generally have a lowered ramp at each end to assist the wheeling of wheelchairs on and off the upper surfaces. The method may include wheeling the wheelchair onto the first and second platforms from a ramp at one end of the first and second platforms, noting the summed weight provided by the scales of the first and second platforms, and then wheeling the wheelchair off the first and second platforms from a ramp at the other end of the first and second platforms. This prevents the need for the front wheel of the wheelchair to rotate 180 degrees as its wheeled backwards off the ramp onto which it was wheeled onto the platforms.

### Kit of Parts

According to a further aspect of the present invention there is provided a kit of parts comprising the apparatus as described herein, and instructions for use.

The apparatus is generally calibrated prior to being packaged in the kit of parts and is used within 3 years of calibration.

Alternatively, or additionally, the instructions may include instructions for calibrating the apparatus prior to use.

The kit of parts generally includes charging means.

Further aspects and embodiments of the invention are set forth in the following description and claims.

The present invention is further described by way of example only with reference to the accompanying Figures in which:
Figure 1 shows an embodiment of the apparatus of the present invention in the weighing position;
Figure 2 shows an end view of an embodiment of the apparatus of the present invention in the weighing position;
Figure 3 shows the embodiment of Figure 2 in the folded position;
Figure 4 shows the embodiment of Figure 2 and Figure 3 with one of the platforms in the folded position, and the other of the platforms in the weighing position;
Figure 5 shows the embodiment of Figures 2 to 4 in the folded position;
Figure 6 shows a handle for use with the apparatus of the present invention;
Figure 7 shows the handle of Figure 6;
Figure 8 shows an embodiment of the apparatus of the present invention in the weighing position (with measurements provided in mm);
Figure 9 shows a cross section of the apparatus of Figure 8 along A-A section (with measurements provided in degrees);
Figure 10 shows a side view of the apparatus of Figures 8 and 9 (with measurements provided in mm);
Figure 11 shows an end view of the apparatus of Figures 8 to 10 (with measurements provided in mm);
Figure 12 shows a plan view of the apparatus of Figures 8 to 11 in a folded position (with measurements provided in mm);
Figure 13 shows a side view of the apparatus of Figures 8 to 12 in a folded position (with measurements provided in mm);
Figure 14 shows an end view of the apparatus of Figures 8 to 13 in a folded position;
Figure 15 shows a base view of the apparatus of Figures 8 to 13 in a weighing position (with measurements provided in mm);
Figure 16 shows a partial enlargement of the marked portion A of Figure 14 (with measurements provided in mm);

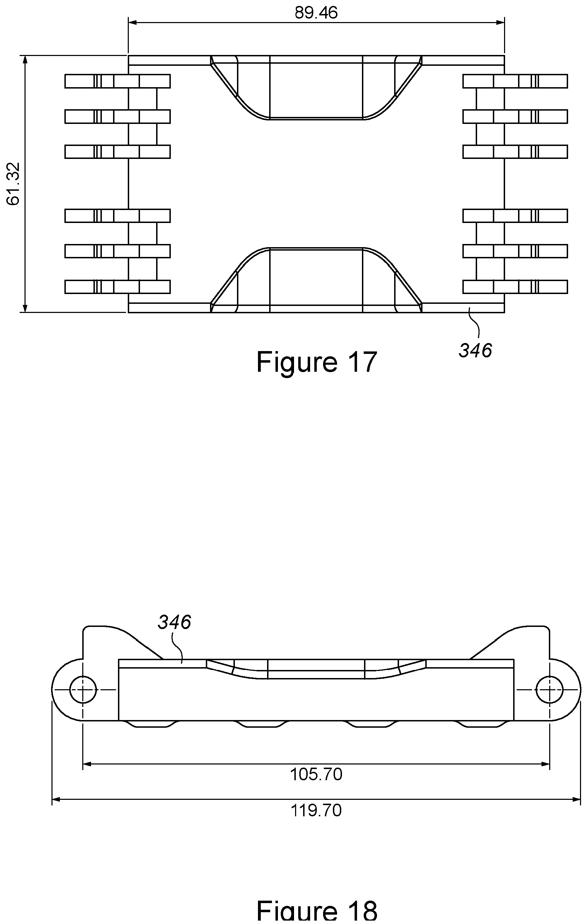

Figure 17 shows a plan view of the base portion of the apparatus of Figures 8 to 16(with measurements provided in mm);
Figure 18 shows a side view of the base portion of the apparatus of Figures 8 to 17(with measurements provided in mm).

### Detailed Description of the Preferred Embodiment(s)

The preferred embodiment provides an apparatus for weighing people with reduced mobility in a wheelchair. Various aspects and features of the apparatus will now be described.

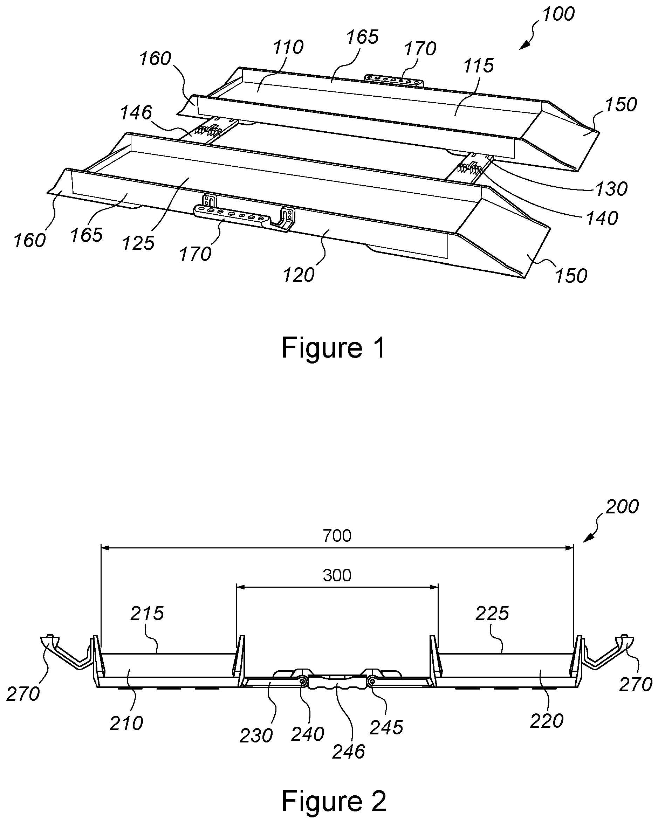

Figure 1 shows the apparatus 100, including a first platform, 110, and a second platform, 120. Both of the first and second platforms, 110, 120, include an upper surface, 115, 125. The upper surfaces, 115, 125, are for receiving the wheels of the wheelchair during the weighing procedure. The first and second platforms, 110, 120, are connecting through two connecting members, 130 spaced along the length of the first and second platforms, 110, 120. Each connecting member, 130, includes a hinge, 140. The hinges, 140 are configured to pivot the first platform, 110, around 90 degrees towards the second platform, 120; and to pivot the second platform, 120, around 90 degrees towards the first platform, 110. The connecting member comprises a base portion 146.

Electrical wiring allowing electrical communication between the first platform 110 and the second platform 120 and extending between the first platform 110 and the second platform 120 is threaded through the hinge, 140. This protects the cabling, in particular during movement of the first and second platforms between the weighing position and the folded position.

The first and second platforms, 110, 120, include a ramp 150 onto the upper surface 115, 125, and a ramp, 160 off the upper surface 115, 125. The ramp, 150, onto the upper surface 115, 125 has a shallower gradient than the ramp 160 off the upper surface 115, 125 to facilitate wheeling of the wheelchair onto the first and second platforms, 110, 120. The first and second platforms, 110, 120, include a raised lip, 165 along the sides of the upper surfaces 115, 125. The lip prevents the wheels of a wheelchair from inadvertently slipping off the upper platforms 115, 125.

The first and second platforms, 110, 120, include a handle portion 170.

Figures 2 shows an apparatus, 200, including a first and second platform, 210, 220, connected through a connecting member, 230. The connecting member, 230 includes a first hinge 240, and a second hinge, 245. The first hinge is configured to pivot the first platform, 210 around 90 degrees clockwise. The second hinge, 245 is configured to pivot the second platform, 220 around 90 degrees anticlockwise. A base portion, 246 is provided between the first and second hinges, 240, 245. This arrangement may be termed a knuckle joint. The base portion, 246, is substantially parallel to the first and second platforms 210, 220 in the weighing position, and is substantially perpendicular to the first and second platforms 210, 220 in the folded position.

The measurements provided in Figure 2 are in mm. The first and second platforms, 210, 220 each have a width of 200 mm. The upper surfaces 215, 225 of the first and second platforms 210, 220 are spaced by 300 mm, the connecting member 230 has a length of just under 300 mm.

The first and second platforms, 210, 220, include a handle portion 270.

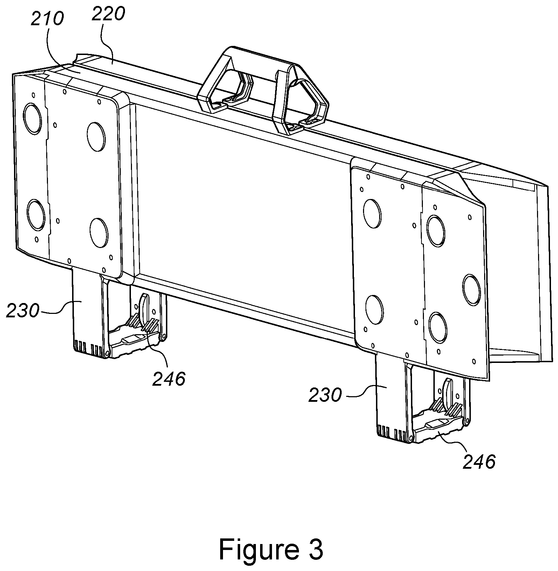

Figure 3 shows the apparatus of Figure 2 in the folded position. The first and second platforms 210, 220 abut each other. All electrical wiring is contained within the first and second platforms, 210, 220 or the connecting members, 230. The base portions 246 provide a stand for the apparatus in the folded position.

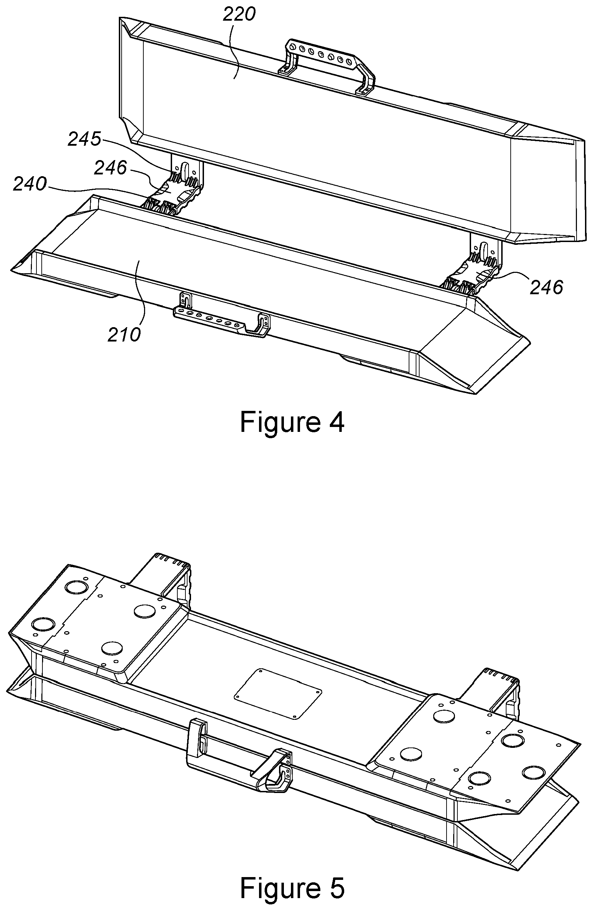

Figure 4 shows the embodiment of Figure 2 and Figure 3 with the first platform, 210 in the weighing position, the first platform 210, being parallel to the base portion, 246 and the second platform, 220 in the folded position, the second platform 220 being perpendicular to the base portion 246. The second platform 220 can fold back onto the first platform, 210 whilst the first platform, 210 is supported by the floor for ease of use. Once in the folded position, the apparatus can be moved onto the base portions 246 for ease of storage of carrying. The first and second platforms are interconnected by electrical cabling threaded through the hinges and connecting member.

Figure 5 shows the embodiment of Figure 4 in the folded position.

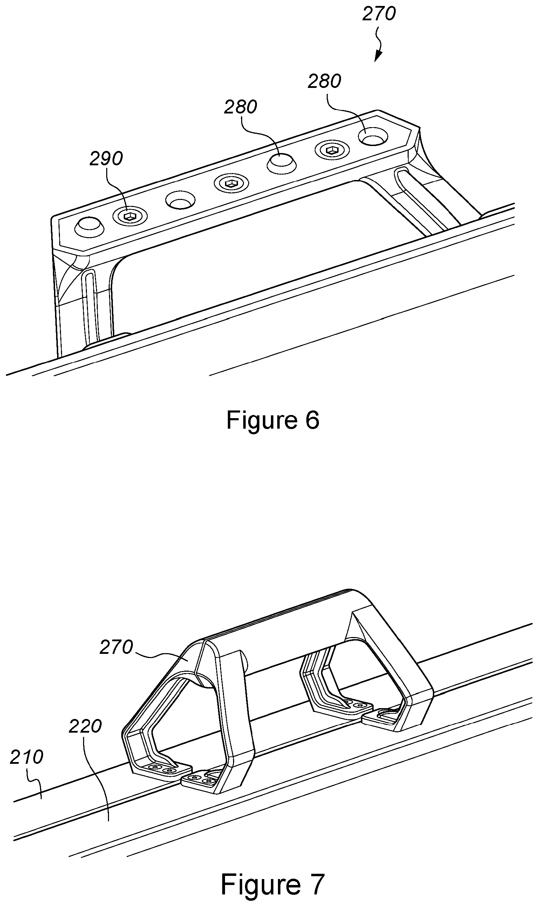

Figure 6 shows a handle, 270 for attachment to either of the first and second platforms, 210, 220. The handle includes corresponding magnets, 290, placed within the handle of the other of the first and second platforms, 210, 220. The handle also includes female details, with the handle of the other of the first and second platforms including corresponding male details 280. This is to ensure that once closed, the first and second platforms don't open inadvertently.

Figure 7 shows the handle of Figure 6 providing closure for the first and second platforms, 210, 220.

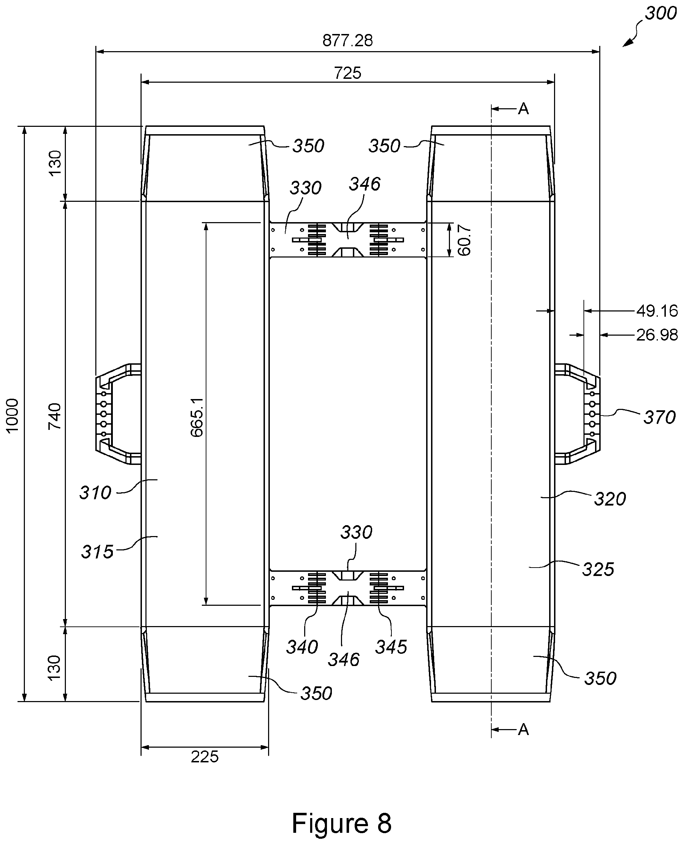

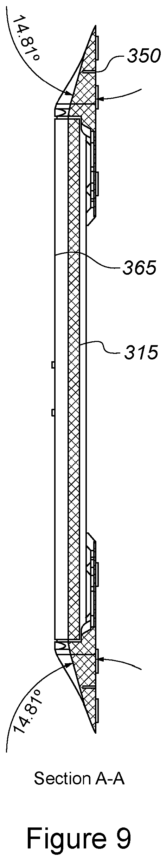

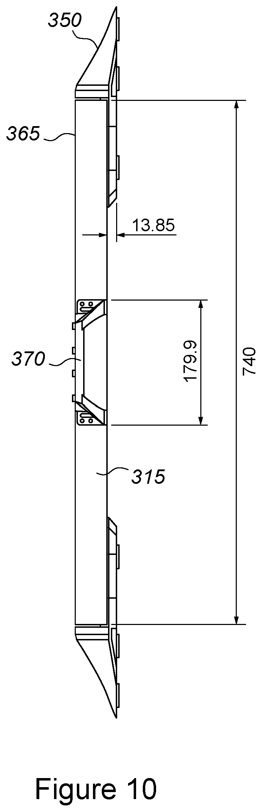

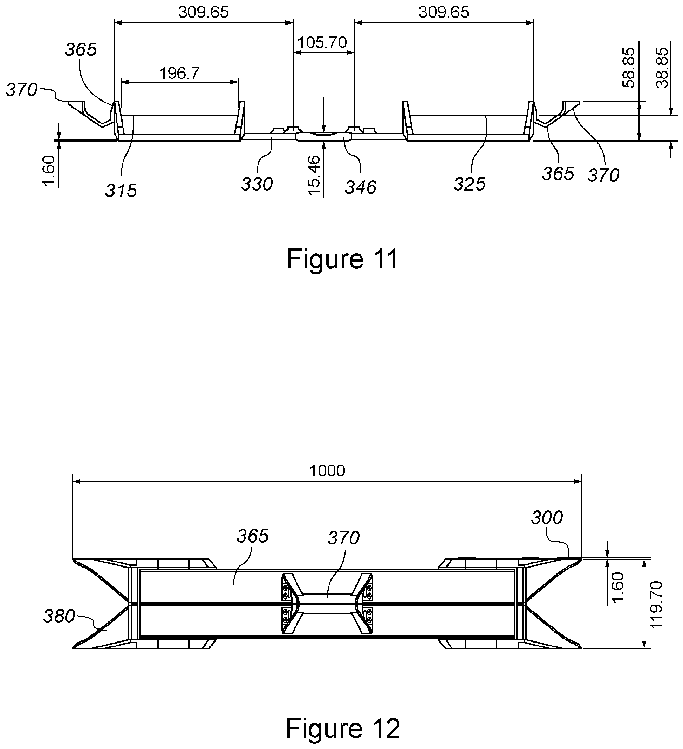

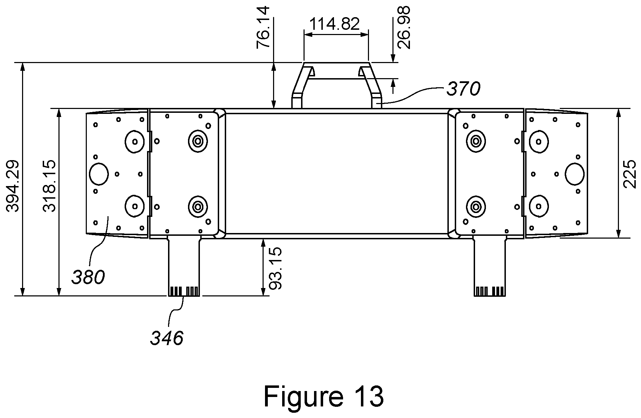

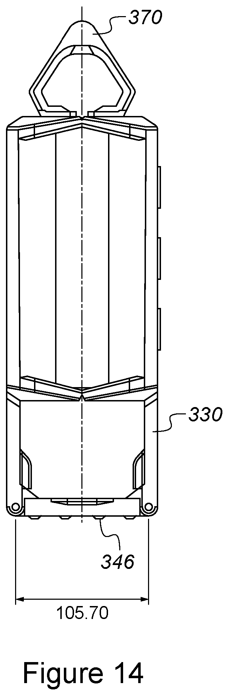

Figure 8 to 16 show an apparatus, 300, including a first and second platform, 310, 320, connected through a connecting member, 330. The first and second platforms, 310, 320 each include an upper surface, 315, 325. The connecting member, 330 includes a first hinge 340, and a second hinge, 345. The first hinge 340 is configured to pivot the first platform, 310 around 90 degrees clockwise. The second hinge, 345 is configured to pivot the second platform, 320 around 90 degrees anticlockwise. A base portion, 346 is provided between the first and second hinges, 340, 345.

Each end of the first and second platforms, 310, 320 include a ramp, 350. All of the ramps are at approximately the same gradient. Each side of the first and second platforms includes a raised lip, 365. The apparatus includes protruding rubber feet 380.

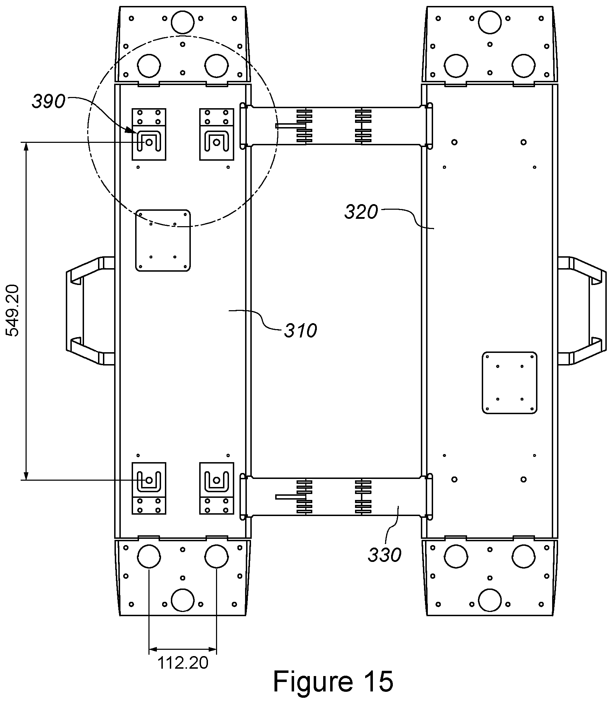

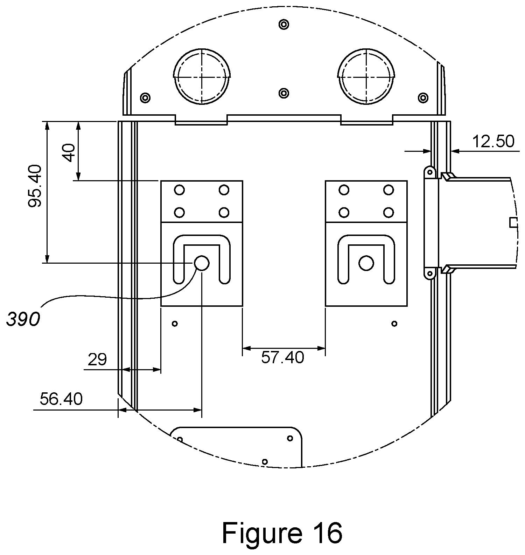

The load cells positioned as according to one embodiment are visible in Figure 15 and associated Figure 16. The geometric centre of the illustrated load cell, 390, is provided 49.4 mm from a corner of the first platform, 310.

Various features have been described above in relation to an apparatus to weigh a wheelchair, but variants are possible in which the operative elements described above are provided in alternative forms. Appropriate modifications may be made for example to incorporate the above-mentioned features into an apparatus to weigh any wheeled chair or a wheeled hospital bed (in-patient or out-patient). Modification may be made to weigh a person on a chair without wheels. The concepts described herein can of course also be used to weigh things rather than people, or for any other appropriate purpose.

## Claims

1. Apparatus for weighing a wheelchair, the apparatus comprising:
a first platform (110, 210) and a second platform (120, 220), wherein the first platform (110, 210) is connected to the second platform (120, 220), and wherein each of the first and second platforms (110, 120, 210, 220) comprises a scale for weighing the wheelchair, said first platform (110, 210) being moveable relative to the second platform (120, 220) between a folded position and a weighing position,
wherein the first platform (110, 210) pivots towards the second platform (120, 220) about a first fixed axis of rotation to move from the weighing position to the folded position and the second platform (120, 220) pivots towards the first platform (110, 210) about a second fixed axis of rotation to move from the weighing position to the folded position;
wherein in the weighing position, the first and second platforms (110, 120, 210, 220) are configured to support all of the wheels of the wheelchair simultaneously;
a connecting member (130, 230) connecting the first platform (110, 210) to the second platform (120, 220), wherein the first and second axes of rotation are spaced along or across the connecting member (130, 230) and a base portion (146, 246) is provided between the first and second axis of rotation, **characterized in that** the base portion (146, 246) provides a stand for the apparatus in the folded position.

2. The apparatus as claimed in Claim 1 wherein each of the first and second platforms (110, 120, 210, 220) has two ends and two sides and the sides have a length sufficient to allow the wheelchair to be entirely supported by the first and second platforms (110, 120, 210, 220).

3. The apparatus as claimed in either one of Claim 1 and Claim 2 wherein the angle of rotation of each of the first and second platforms (110, 120, 210, 220) between the folded position and the weighing position is 70 to 180 degrees, suitably 70 to 100 degrees.

4. The apparatus as claimed in any preceding Claim wherein the first and second platforms (110, 120, 210, 220) each have an upper surface configured to receive the wheels of the wheelchair in the weighing position, wherein the base portion is perpendicular to the upper surface of the first and second platforms (110, 120, 210, 220) in the folded position, generally wherein the base portion is parallel to the upper surface of the first and second platforms (110, 120, 210, 220) in the weighing position.

5. The apparatus as claimed in any preceding Claim comprising more than one connecting member (130, 230), connecting the first platform (110, 210) to the second platform (120, 220) and each connecting member (130, 230) includes a base portion (146, 246).

6. The apparatus of any preceding Claim wherein the distance between the first and second axes of rotation is less than the width of each of the first and second platforms (110, 120, 210, 220).

7. The apparatus as claimed in any preceding Claim wherein the base portion has a length of 50 to 100 mm, generally 75 to 100 mm.

8. The apparatus as claimed in any preceding Claim wherein the axes of rotation about which the first and second platforms (110, 120, 210, 220) pivot are substantially parallel to the longitudinal axis of the first and second platforms (110, 120, 210, 220).

9. The apparatus as claimed in any preceding Claim wherein each of the first and second platforms (110, 120, 210, 220) comprises three to ten load cells, generally wherein the geometric centre of all of the load cells is provided 4 to 7 cm from the perimeter of the first or second platforms (110, 120, 210, 220), generally within 5 to 6 cm from the perimeter of the first or second platforms (110, 120, 210, 220).

10. The apparatus as claimed in Claim 9, wherein each of the first and second platforms (110, 120, 210, 220) comprises four to ten load cells;
the first and second platforms (110, 120, 210, 220) each have an upper surface configured to receive all of the wheels of the wheelchair in the weighing position simultaneously,
each of the upper surfaces is substantially rectangular,
the geometric centre of at least one load cell is provided within 6 cm of each of the corners of the upper surfaces, and the geometric centre of all of the load cells is provided less than 7 cm from a corner of each of the upper surfaces.

11. The apparatus as claimed in any preceding Claim wherein electrical wiring and/or electrical cables are provided connected to the first platform (110, 210) and the second platform (120, 220), wherein the electrical wiring and/or electrical cables extend through the connecting member (130, 230).

12. The apparatus as claimed in any preceding Claim wherein the first and second platforms (110, 120, 210, 220) have a lowered ramp at each end, and the gradient of the ramp at one end differs from the gradient of the ramp at the other end.

13. The apparatus as claimed in any preceding Claim having a weight of 8 to 10 kg.

14. A method of weighing a person seated in a wheelchair comprising:
providing the apparatus as claimed in any one of Claims 1 to 13;
positioning the first and second platforms (110, 120, 210, 120) into the weighing position:
wheeling the wheelchair onto the first and second platforms (110, 120, 210, 220), such that all wheels of the wheelchair are supported by the first and second platforms (110, 120, 210, 220);
noting the summed weight provided by the scales of the first and second platforms (110, 120, 210, 220);
optionally subtracting the weight of the wheelchair from the summed weight to provide the person's weight.

## Patentansprüche

1. Vorrichtung zum Wiegen eines Rollstuhls, wobei die Vorrichtung Folgendes umfasst:
eine erste Plattform (110, 210) und eine zweite Plattform (120, 220), wobei die erste Plattform (110, 210) mit der zweiten Plattform (120, 220) verbunden ist, und wobei jede von der ersten und der zweiten Plattform (110, 120, 210, 220) eine Waage zum Wiegen des Rollstuhls umfasst, wobei die erste Plattform (110, 210) in Bezug auf die zweite Plattform (120, 220) zwischen einer geklappten Position und einer Wiegeposition bewegbar ist,
wobei die erste Plattform (110, 210) um eine erste feste Drehachse zu der zweiten Plattform (120, 220) schwenkt, um sich von der Wiegeposition in die geklappte Position zu bewegen, und die zweite Plattform (120, 220) um eine zweite feste Drehachse zu der ersten Plattform (110, 210) schwenkt, um sich von der Wiegeposition in die geklappte Position zu bewegen;
wobei die erste und die zweite Plattform (110, 120, 210, 220) in der Wiegeposition konfiguriert sind, um alle Räder des Rollstuhls gleichzeitig zu tragen;
ein Verbindungselement (130, 230), das die erste Plattform (110, 210) mit der zweiten Plattform (120, 220) verbindet, wobei die erste und die zweite Drehachse entlang oder quer zu dem Verbindungselement (130, 230) beabstandet sind und ein Basisabschnitt (146, 246) zwischen der ersten und der zweiten Drehachse bereitgestellt ist,
**dadurch gekennzeichnet, dass**
der Basisabschnitt (146, 246) einen Ständer für die Vorrichtung in der geklappten Position bereitstellt.

2. Vorrichtung nach Anspruch 1, wobei jede von der ersten und der zweiten Plattform (110, 120, 210, 220) zwei Enden und zwei Seiten aufweist und die Seiten eine Länge aufweisen, die ausreichend ist, um zu ermöglichen, dass der Rollstuhl vollständig von der ersten und der zweiten Plattform (110, 120, 210, 220) getragen wird.

3. Vorrichtung nach einem der Ansprüche 1 und 2, wobei der Drehwinkel jeder von der ersten und der zweiten Plattform (110, 120, 210, 220) zwischen der geklappten Position und der Wiegeposition 70 bis 180 Grad, auf geeignete Weise 70 bis 100 Grad, ist.

4. Vorrichtung nach einem der vorhergehenden Ansprüche, wobei die erste und die zweite Plattform (110, 120, 210, 220) jeweils eine obere Fläche aufweisen, die konfiguriert ist, um die Räder des Rollstuhls in der Wiegeposition aufzunehmen, wobei der Basisabschnitt in der geklappten Position senkrecht zu der oberen Fläche der ersten und der zweiten Plattform (110, 120, 210, 220) ist, wobei generell der Basisabschnitt in der Wiegeposition parallel zu der oberen Fläche der ersten und der zweiten Plattform (110, 120, 210, 220) ist.

5. Vorrichtung nach einem der vorhergehenden Ansprüche, umfassend mehr als ein Verbindungselement (130, 230), das die erste Plattform (110, 210) mit der zweiten Plattform (120, 220) verbindet, und wobei jedes Verbindungselement (130, 230) einen Basisabschnitt (146, 246) beinhaltet.

6. Vorrichtung nach einem der vorhergehenden Ansprüche, wobei der Abstand zwischen der ersten und der zweiten Drehachse kleiner ist als die Breite von jeder der ersten und der zweiten Plattform (110, 120, 210, 220).

7. Vorrichtung nach einem der vorhergehenden Ansprüche, wobei der Basisabschnitt eine Länge von 50 bis 100 mm, generell 75 bis 100 mm, aufweist.

8. Vorrichtung nach einem der vorhergehenden Ansprüche, wobei die Drehachsen, um die die erste und die zweite Plattform (110, 120, 210, 220) schwenken, im Wesentlichen parallel zu der Längsachse der ersten und der zweiten Plattform (110, 120, 210, 220) sind.

9. Vorrichtung nach einem der vorhergehenden Ansprüche, wobei jede von der ersten und der zweiten Plattform (110, 120, 210, 220) drei bis zehn Wägezellen umfasst, wobei generell der geometrische Mittelpunkt aller Wägezellen 4 bis 7 cm von dem Umfang der ersten oder der zweiten Plattform (110, 120, 210, 220), generell innerhalb von 5 bis 6 cm von dem Umfang der ersten oder der zweiten Plattform (110, 120, 210, 220), entfernt bereitgestellt ist.

10. Vorrichtung nach Anspruch 9, wobei jede von der ersten und der zweiten Plattform (110, 120, 210, 220) vier bis zehn Wägezellen umfasst;
die erste und die zweite Plattform (110, 120, 210, 220) jeweils eine obere Fläche aufweisen, die konfiguriert ist, um in der Wiegeposition alle Räder des Rollstuhls gleichzeitig aufzunehmen,
jede der oberen Flächen im Wesentlichen rechteckig ist,
der geometrische Mittelpunkt von mindestens einer Wägezelle innerhalb von 6 cm von jeder der Ecken der oberen Flächen bereitgestellt ist und der geometrische Mittelpunkt aller Wägezellen weniger als 7 cm von einer Ecke jeder der oberen Flächen bereitgestellt ist.

11. Vorrichtung nach einem der vorhergehenden Ansprüche, wobei eine elektrische Verdrahtung und/oder elektrische Kabel bereitgestellt sind, die mit der ersten Plattform (110, 210) und der zweiten Plattform (120, 220) verbunden sind, wobei sich die elektrische Verdrahtung und/oder die elektrischen Kabel durch das Verbindungselement (130, 230) erstrecken.

12. Vorrichtung nach einem der vorhergehenden Ansprüche, wobei die erste und die zweite Plattform (110, 120, 210, 220) an jedem Ende eine abgesenkte Rampe aufweisen und sich die Neigung der Rampe an einem Ende von der Neigung der Rampe an dem anderen Ende unterscheidet.

13. Vorrichtung nach einem der vorhergehenden Ansprüche, die ein Gewicht von 8 bis 10 kg aufweist.

14. Verfahren zum Wiegen einer in einem Rollstuhl sitzenden Person, umfassend:
Bereitstellen der Vorrichtung nach einem der Ansprüche 1 bis 13;
Positionieren der ersten und der zweiten Plattform (110, 120, 210, 220) in der Wiegeposition;
Fahren des Rollstuhls auf die erste und die zweite Plattform (110, 120, 210, 220), sodass alle Räder des Rollstuhls von der ersten und der zweiten Plattform (110, 120, 210, 220) getragen werden;
Notieren des von den Waagen der ersten und der zweiten Plattform (110, 120, 210, 220) bereitgestellten summierten Gewichts;
optional Subtrahieren des Gewichts des Rollstuhls von dem summierten Gewicht, um das Gewicht der Person bereitzustellen.

## Revendications

1. Appareil de pesée d'un fauteuil roulant, l'appareil comprenant :
une première plate-forme (110, 210) et une seconde plate-forme (120, 220), dans lequel la première plate-forme (110, 210) est reliée à la seconde plate-forme (120, 220), et dans lequel chacune des première et seconde plates-formes (110, 120, 210, 220) comprend une balance pour peser le fauteuil roulant, ladite première plate-forme (110, 210) étant mobile par rapport à la seconde plate-forme (120, 220) entre une position pliée et une position de pesée,
dans lequel la première plate-forme (110, 210) pivote vers la seconde plate-forme (120, 220) autour d'un premier axe de rotation fixe pour se déplacer de la position de pesée à la position pliée et la seconde plate-forme (120, 220) pivote vers la première plate-forme (110, 210) autour d'un second axe de rotation fixe pour se déplacer de la position de pesée à la position pliée ;
dans lequel, dans la position de pesée, les première et seconde plates-formes (110, 120, 210, 220) sont configurées pour supporter toutes les roues du fauteuil roulant simultanément ;
un élément de liaison (130, 230) reliant la première plate-forme (110, 210) à la seconde plate-forme (120, 220), dans lequel les premier et second axes de rotation sont espacés le long ou à travers l'élément de liaison (130, 230) et une partie de base (146, 246) est prévue entre les premier et second axes de rotation,
**caractérisé en ce que**
la partie de base (146, 246) fournit un pied pour l'appareil en position pliée.

2. Appareil selon la revendication 1, dans lequel chacune des première et seconde plates-formes (110, 120, 210, 220) comporte deux extrémités et deux côtés et les côtés comportent une longueur suffisante pour permettre au fauteuil roulant d'être entièrement supporté par les première et seconde plates-formes (110, 120, 210, 220).

3. Appareil selon l'une ou l'autre des revendications 1 et 2, dans lequel l'angle de rotation de chacune des première et seconde plates-formes (110, 120, 210, 220) entre la position pliée et la position de pesée est de 70 à 180 degrés, de manière appropriée de 70 à 100 degrés.

4. Appareil selon l'une quelconque des revendications précédentes, dans lequel les première et seconde plates-formes (110, 120, 210, 220) comportent chacune une surface supérieure configurée pour recevoir les roues du fauteuil roulant dans la position de pesée, dans lequel la partie de base est perpendiculaire à la surface supérieure des première et seconde plates-formes (110, 120, 210, 220) dans la position pliée, généralement dans lequel la partie de base est parallèle à la surface supérieure des première et seconde plates-formes (110, 120, 210, 220) dans la position de pesée.

5. Appareil selon l'une quelconque des revendications précédentes, comprenant plus d'un élément de liaison (130, 230), reliant la première plate-forme (110, 210) à la seconde plate-forme (120, 220), et chaque élément de liaison (130, 230) comprend une partie de base (146, 246).

6. Appareil selon l'une quelconque des revendications précédentes, dans lequel la distance entre les premier et second axes de rotation est inférieure à la largeur de chacune des première et seconde plates-formes (110, 120, 210, 220).

7. Appareil selon l'une quelconque des revendications précédentes, dans lequel la partie de base comporte une longueur de 50 à 100 mm, généralement de 75 à 100 mm.

8. Appareil selon l'une quelconque des revendications précédentes, dans lequel les axes de rotation autour desquels pivotent les première et seconde plates-formes (110, 120, 210, 220) sont sensiblement parallèles à l'axe longitudinal des première et seconde plates-formes (110, 120, 210, 220).

9. Appareil selon l'une quelconque des revendications précédentes, dans lequel chacune des première et seconde plates-formes (110, 120, 210, 220) comprend trois à dix cellules de charge, généralement dans lequel le centre géométrique de toutes les cellules de charge est prévu à 4 à 7 cm du périmètre des première ou seconde plates-formes (110, 120, 210, 220), généralement à 5 à 6 cm du périmètre des première ou seconde plates-formes (110, 120, 210, 220).

10. Appareil selon la revendication 9, dans lequel chacune des première et seconde plates-formes (110, 120, 210, 220) comprend quatre à dix cellules de charge ;
les première et seconde plates-formes (110, 120, 210, 220) comportent chacune une surface supérieure configurée pour recevoir simultanément toutes les roues du fauteuil roulant en position de pesée,
chacune des surfaces supérieures est sensiblement rectangulaire,
le centre géométrique d'au moins une cellule de charge est prévu à une distance maximum de 6 cm de chacun des coins des surfaces supérieures, et le centre géométrique de toutes les cellules de charge est prévu à moins de 7 cm d'un coin de chacune des surfaces supérieures.

11. Appareil selon l'une quelconque des revendications précédentes, dans lequel des fils électriques et/ou des câbles électriques sont fournis connectés à la première plate-forme (110, 210) et à la seconde plate-forme (120, 220), dans lequel les fils électriques et/ou les câbles électriques s'étendent à travers l'élément de liaison (130, 230).

12. Appareil selon l'une quelconque des revendications précédentes, dans lequel les première et seconde plates-formes (110, 120, 210, 220) comportent une rampe abaissée à chaque extrémité, et le gradient de la rampe à une extrémité diffère du gradient de la rampe à l'autre extrémité.

13. Appareil selon l'une quelconque des revendications précédentes comportant un poids de 8 à 10 kg.

14. Procédé de pesée d'une personne assise dans un fauteuil roulant comprenant :
la fourniture de l'appareil selon l'une quelconque des revendications 1 à 13 ;
le positionnement des première et seconde plates-formes (110, 120, 210, 220) dans la position de pesée ;
le fait de rouler le fauteuil roulant sur les première et seconde plates-formes (110, 120, 210, 220), de telle sorte que toutes les roues du fauteuil roulant soient supportées par les première et seconde plates-formes (110, 120, 210, 220) ;
le relevé du poids total fourni par les balances des première et seconde plates-formes (110, 120, 210, 220) ;
la soustraction éventuelle du poids du fauteuil roulant du poids total pour obtenir le poids de la personne.
